# EUROPÄISCHE PATENTANMELDUNG

(11) **EP 0 895 373 A2**
(43) Veröffentlichungstag der Anmeldung: **03.02.1999**
(21) Anmeldenummer: 98202068.7
(22) Anmeldetag: 22.06.1998
(51) Int. Cl.: H04L 12/24

(54) **Übertragungssystem mit einer Verwaltungssoftware**

(30) Priorität: 28.06.1997 DE 19727624
(71) Anmelder: Philips Patentverwaltung GmbH, 22335 Hamburg (DE); Koninklijke Philips Electronics N.V., 5621 BA Eindhoven (NL)
(72) Erfinder: Helbig, Tobias, Dr., Röntgenstrasse 24, 22335 Hamburg (DE); Neunast, Karl W., Dr., Röntgenstrasse 24, 22335 Hamburg (DE); Abramowski, Stephan, Dr., Röntgenstrasse 24, 22335 Hamburg (DE); Gappisch, Holger, Röntgenstrasse 24, 22335 Hamburg (DE); Schreyer, Oliver, Röntgenstrasse 24, 22335 Hamburg (DE); Konrads, Ursula, Dr., Röntgenstrasse 24, 22335 Hamburg (DE); Lautenschläger, Dorit, Röntgenstrasse 24, 22335 Hamburg (DE)
(74) Vertreter: Hartmann, Heinrich, Dipl.-Ing.

(57) **Zusammenfassung**

Die Erfindung betrifft ein Übertragungssystem mit Mitteln zur Steuerung der Datenübertragung zwischen mehreren Netzelementen (2A, 3A). Die Anforderungen an die Datenübertragung zur Übertragung verschiedenster Daten, z.B. Multimedia-Daten (Audio-, Videodaten), zwischen Netzelementen wie beispielsweise PCs (2A), Workstations oder Datenservern (3A) steigen insbesondere hinsichtlich der Geschwindigkeit, der Übertragungssicherheit und der Synchronisierung von Datenströmen ständig an. Bei dem erfindungsgemäßen Übertragungssystem mit verbesserten Übertragungseigenschaften und mit geeigneten Mitteln zur Steuerung der Datenübertragung ist deshalb eine Verwaltungssoftware (SMC) zur Verwaltung und Steuerung von Kommunikationssitzungen, welche eine in mehrere Funktionsgruppen aufgeteilte Architektur aufweist, wobei eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind. Ein solches Übertragungssystem kann vor allem in einem Nachrichteninformationssystem zum Recherchieren in Nachrichtenmaterial und zum Erstellen von Nachrichtenbeiträgen, in einem Ärzteverbundnetzwerk zur Übertragung von medizinischen Bilddaten oder in einem Kommunikationssystem eingesetzt werden.

Die Erfindung betrifft außerdem die Verwaltungssoftware (SMC) selbst sowie ein Netzelement oder ein Medium mit einer solchen Verwaltungssoftware (SMC).

## Beschreibung

Die Erfindung betrifft ein Übertragungssystem mit Mitteln zur Steuerung der Datenübertragung zwischen mehreren Netzelementen.

Ein solches Übertragungssystem ist aus "Middleware: Schlüsseltechnologie zur Entwicklung verteilter Informationssysteme", M. Tesch, Informatik-Spektrum 19: 249-256, Springer Verlag bekannt.

Übertragungssysteme zur Übertragung von Daten der verschiedensten Arten zwischen beliebig vielen Netzelementen eines Netzwerkes, die beliebig weit auseinander angeordnet sein können, sind vielfach bekannt. Zwischen Netzelementen wie beispielsweise PCs, Workstations oder Datenservern, sollen dabei z.B. Multimedia-Daten (Audio-, Videodaten) übertragen werden. Die Anforderungen an die Datenübertragung insbesondere hinsichtlich der Geschwindigkeit, der Übertragungssicherheit und der Synchronisierung von Datenströmen (d.h. gleichzeitiges Ausspielen derselben Daten bei mehreren Empfängern) steigen dabei ständig. Auch die Zahl der Netzelemente, die Zahl der verschiedenen Typen von Netzelementen oder einzelnen Komponenten von Netzelementen oder des Netzwerkes (z.B. Speicherelemente, Ubertragungsmedien, usw.) und deren Komplexität sowie die Komplexität von Anwendungen, die Datenübertragungsdienste erfordern, wachsen ständig. Solche Übertragungssysteme sollen auch leicht erweiterbar sein, um weitere Netzelemente oder Komponenten, ohne daß dadurch Änderungen an den Anwendungen oder an den Protokollen, die die Datenübertragung steuern, erforderlich werden.

Der Erfindung liegt deshalb die Aufgabe zugrunde, ein Übertragungssystem der eingangs genannten Art mit verbesserten Übertragungseigenschaften und insbesondere geeignete Mittel zur Steuerung der Datenübertragung anzugeben.

Diese Aufgabe wird erfindungsgemäß dadurch gelöst, daß die Mittel eine Verwaltungssoftware zur Verwaltung und Steuerung von Kommunikationssitzungen aufweisen, daß die Verwaltungssoftware eine in mehrere Funktionsgruppen aufgeteilte Architektur aufweist und daß eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind.

Eine Kommunikationssitzung wird eingerichtet, wenn von einer Anwendung die Übertragung von Daten zwischen zwei oder mehr Netzelementen angefordert wird. In einer Kommunikationssitzung sind alle Beziehungen und Interaktionen zwischen Netzelementen, die bei der angeforderten Datenübertragung auftreten, zusammengefaßt. Kommunikationssitzungen werden von der Verwaltungssoftware durch Aufstellen eines Sitzungsprofils, das insbesondere die beteiligten Netzelemente und die Übertragungsmittel und -wege beschreibt, und durch Vergabe eines eindeutigen Sitzungsidentifizierers verwaltet und gesteuert.

Die Funktionsgruppen, in die die Verwaltungssoftware aufgeteilt ist, sind jeweils für eine bestimmte Gruppe von Verwaltungs- und Steuerungsaufgaben im Zusammenhang mit der Datenübertragung zuständig. Eine Funktionsgruppe kann aus verschiedenen Elementen aufgebaut sein, die die Aufgaben durchführen und die entsprechende Funktionalität aufweisen, für die die Funktionsgruppe zuständig ist. Zwischen den Elementen der Funktionsgruppen bestehen auch Verbindungen, über die die Funktionsgruppen miteinander kommunizieren und interagieren.

Mit Ressourcen sind im wesentlichen Hardware-Komponenten, Übertragungsmittel und Übertragungsdienste gemeint, die bei der Datenübertragung benutzt werden. Die Steuerung von Datenströmen erfolgt mittels Datenstromsteuerungsprotokollen, die vor der tatsächlichen Datenübertragung von den Elementen der zuständigen Funktionsgruppe der Verwaltungssoftware erstellt werden.

Das erfindungsgemäße Übertragungssystem hat den Vorteil, daß eine große Freiheit bei der Verteilung der Verwaltungssoftware besteht. Diese kann beispielsweise zentral auf einem Netzelement oder verteilt auf mehreren Netzelementen angeordnet sein, für die Anwendungen ist der Ort, an dem die Verwaltungsoftware angeordnet ist, weder sichtbar, noch spielt dies für die Anwendungen ein Rolle. Das erfindungsgemäße Übertragungssystem ist auch sehr einfach erweiterbar um weitere Netzelemente oder Komponenten oder auch um neue Übertragungsdienste, ohne daß die Architektur der Verwaltungssoftware geändert werden muß. Auch die Anwendungsprogramme oder die Datenstromsteuerungsprotokolle müssen nicht wesentlich verändert werden, bei Einführung neuer Komponenten oder Netzelemente werden lediglich neue Parameterwerte eingeführt, mit denen diese identifiziert werden können.

In einer Ausgestaltung der Erfindung ist vorgesehen, daß die Funktionsgruppen jeweils mindestens ein Funktionsmodul aufweisen und daß den Funktionsmodulen weitere Submodule zugeordnet sind. Die Funktionsmodule sind dauerhaft eingerichtet und jeweils mindestens ein einziges Mal im Übertragungssystem vorhanden, während die Submodule teilweise mehrfach (einmal auf jedem Netzelement. das an einer Datenübertragung beteiligt ist) und teilweise auch nur solange vorhanden sind, wie sie für eine Datenübertragung benötigt werden. Die Funktionsgruppen sind leicht erweiterbar um weitere Submodule, ohne daß andere Submodule wesentlich geändert werden müssen, und die Submodule sind auch anwendungsabhängig konfigurierbar, falls dies erforderlich ist.

Eine vorteilhafte Ausgestaltung der Erfindung sieht vor, daß die Verwaltungssoftware in einer Zwischenschicht zwischen einer Anwendungsschicht und einer Komponentenschicht angeordnet ist. In der Anwendungsschicht laufende Anwendungen brauchen bei einem solchen Dreischicht-Modell die in der Komponentenschicht angeordneten Hardware-Komponenten (Netzelemente oder Teile von Netzelementen) und deren unterschiedliche Befehlssätze nicht zu kennen. Die Umsetzung von Anforderungen der Anwendungsschicht in Befehle, die die Komponenten der Komponentenschicht ansprechen und steuern, erfolgt durch die Verwaltungssoftware in der Zwischenschicht. Diese dreischichtige Struktur unterstützt die einfache Erweiterungsmöglichkeit um Komponenten, ohne Anwendungsprogramme oder die Architektur der Verwaltungssoftware ändern zu müssen.

In einer davon ausgehenden Weiterbildung ist vorgesehen, daß in der Zwischenschicht Komponenten der Komponentenschicht als Objekte abstrahiert angeordnet sind. Objekte werden von der Verwaltungssoftware in der Zwischenschicht eingerichtet (instantiiert), wenn von einer Anwendung eine Datenübertragung angefordert und die entsprechende Kommunikationssitzung eingerichtet wird, und sie werden wieder gelöscht, nachdem die Datenübertragung abgeschlossen ist und die Kommunikationssitzung wieder aufgelöst wird. Anhand dieser Objekte werden die an einer Kommunikationssitzung beteiligten Komponenten auf die Datenübertragung vorbereitet (es wird z.B. die entsprechende Treibersoftware für die Hardware-Komponenten geladen, die Ressourcen werden reserviert usw.) und das Datenstromsteuerungsprotokoll wird initialisiert.

In einer weiteren Ausgestaltung weist die Zwischenschicht eine auf mindestens einem Netzelement angeordnete Schnittstelle zur Anwendungsschicht auf zur Bereitstellung von Befehlen der Verwaltungssoftware und zur Verteilung von aufgerufenen Befehle an die Funktionsgruppen. Von der Schnittstelle werden Befehle zur Verwaltung und Steuerungen von Kommunikationssitzungen und zur Steuerung der Datenübertragung bereitgestellt, die unabhängig sind von dem Typ und dem Befehlssatz der zur Datenübertragung benutzten Komponenten. Zu benutzende Komponenten werden nur durch Parameterwerte beim Aufruf von Befehlen angesprochen. Für die Anwendungen spielt es dabei keine Rolle, wie oft (mindestens einmal) und auf welchem Netzelement diese Schnittstelle vorhanden ist. Da der Schnittstelle bekannt ist, auf welchen Netzelementen die einzelnen Funktionsmodule der Funktionsgruppen angeordnet sind, kann sie die von den Anwendungen aufgerufenen Befehle an die zuständigen Funktionsmodule verteilen.

Die Erfindung betrifft auch eine Verwaltungssoftware zur Verwaltung und Steuerung der Datenübertragung zwischen mehreren Netzelementen, welche eine in mehrere Funktionsgruppen aufgeteilte Architektur aufweist, wobei eine erste Funktionsgruppe zur Konfigurierung von Kommunikationssitzungen, eine zweite Funktionsgruppe zur Verwaltung von Resourcen und eine dritte Funktionsgruppe zur Steuerung von Datenströmen vorgesehen sind. Eine solche Verwaltungssoftware könnte beispielsweise Verwendung finden in einem Datenübertragungssystem zur Übertragung von Multimediadaten, in einem Nachrichteninformationssystem zum Recherchieren in Nachrichtenmaterial und zum Erstellen von Nachrichtenbeiträgen, in einem Ärzteverbundnetzwerk zur Übertragung von medizinischen Bilddaten oder in einem Kommunikationssystem. Z.B. bei Nachrichteninformationssystemen, bei denen das Nachrichtenmaterial (z.B. Videosequenzen) auf unterschiedlichen Netzelementen an verschiedensten Orten gespeichert ist, sind eine Vielzahl von Datenübertragungen erforderlich, wenn Redakteure in verschiedensten Nachrichtenmaterialien recherchieren oder daraus Nachrichtenbeiträge erstellen. Dabei ist es häufig auch erforderlich, Datenströme an mehreren Netzelementen synchron auszugeben oder den Datenfluß interaktiv zu starten und zu stoppen, die Geschwindigkeit eines Datenflusses zu verändern oder Daten rückwärts abzuspielen. Dabei ist meist auch die Verarbeitung und Datenausgabe in Echtzeit erforderlich. Ähnliche Anforderungen können in einem Ärzteverbundnetzwerk bestehen, in dem medizinische Bilddaten (z.B. Ultraschallaufnahmen des Herzen, bewegte Röntgenbilder usw.) übertragen oder beispielsweise von mehreren Ärzten gleichzeitig betrachtet werden sollen.

Weiterhin betrifft die Erfindung auch ein Medium, beispielsweise eine CD-ROM, eine Diskette oder ein anderes Medium, insbesondere ein Speichermedium, mit einer genannten Verwaltungssoftware. Außerdem betrifft die Erfindung ein Netzelement mit einer genannten Verwaltungssoftware.

Die Erfindung wird nachfolgend anhand der Zeichnung näher erläutert. Es zeigen:
- Fig. 1: ein Netzwerk, in dem ein erfindungsgemäßes Übertragungssystem verwirklicht werden kann,
- Fig. 2: zwei Netzelemente zur Erläuterung des Schichtenmodells der erfindungsgemäßen Softwarearchitektur mit verteilter Anordnung der Verwaltungssoftware,
- Fig. 3: ein Blockschaltbild zur Erläuterung der Funktion der Anwendungs-Programm-Schnittstelle,
- Fig. 4: ein Blockschaltbild der Architektur des Profil-Managements,
- Fig. 5: ein Blockschaltbild der Architektur des Ressourcen-Managements,
- Fig. 6: ein Blockschaltbild der Architektur des Datenstrom-Managements und
- Fig. 7: zwei Netzelemente mit zentraler Anordnung der Verwaltungssoftware.

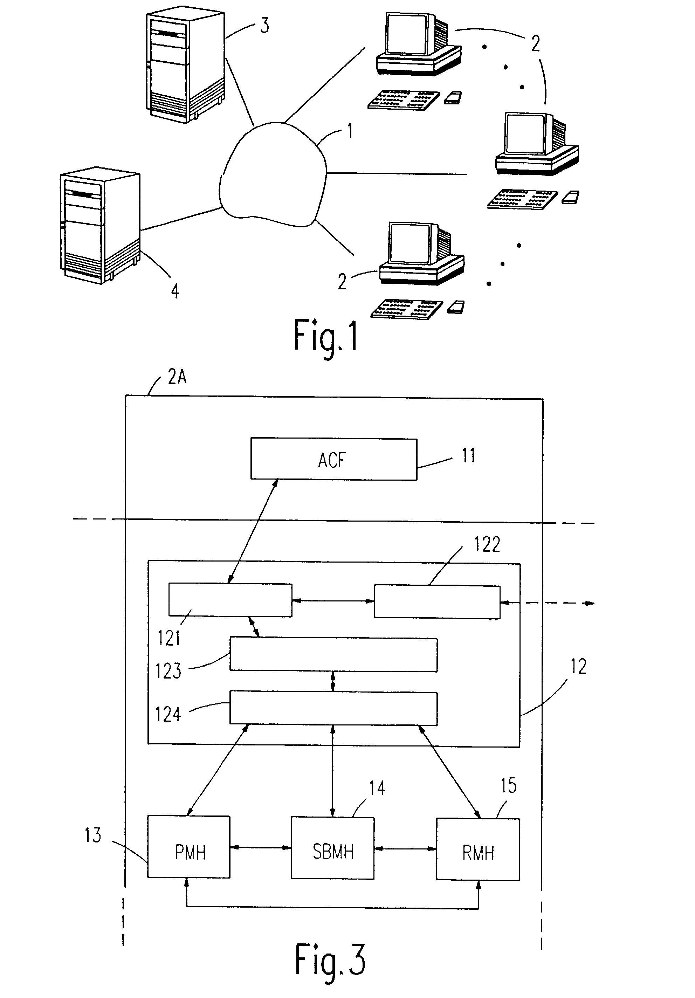

In Fig. 1 ist beispielhaft ein einfaches Netzwerk gezeigt, bei dem die Erfindung eingesetzt werden kann. An dem symbolisch dargestellten Netzwerk 1, das beispielsweise ein lokales Netzwerk (LAN), ein öffentliches Netzwerk (z.B. Internet) oder ein Netzwerk eines Unternehmens (z.B. Intranet) sein kann, sind mehrere Arbeitsstationen 2 (z.B. Workstations oder PCs) miteinander und mit weiteren Netzelementen 3, 4 wie Speicherstationen oder Serverstationen verbunden. Das gezeigte Netzwerk kann beispielsweise ein Multimedia-Kommunikationsnetzwerk (z.B. ein Nachrichtenverarbeitungssystem einer Fernsehstation) sein, über das Audio- und Videodaten übertragen werden, wobei die Netzelemente des Netzwerkes beliebig weit verteilt angeordnet sein können. Die Arbeitsstationen 2 können Multimedia-PCs sein, auf denen unterschiedliche Anwendungen laufen, wie beispielsweise das Recherchieren in Nachrichtenmaterial (Bilder, Videofilme, Texte, Audiodaten, ...) oder das Editieren in diesem Nachrichtenmaterial und das Erstellen von Nachrichtenbeiträgen. Das Netzelement 3 kann z.B. ein Videoserver, das Netzelement 4 ein Dateiserver und das Netzwerk 1 ein ATM-Netzwerk (ATM = asynchroner Transfer Modus) oder ein ISDN-Netzwerk sein.

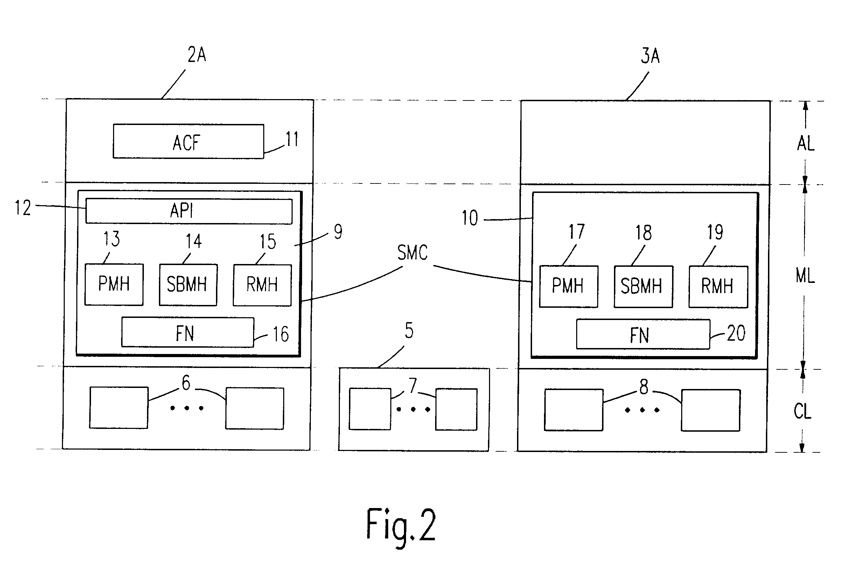

In Fig. 2 sind zwei Netzelemente 2A, 3A gezeigt, die über ein Netzelement 5, beispielsweise einen ATM-Verbindungsknoten, miteinander verbunden sind. Das Netzelement 2A ist dabei eine Arbeitsstation, auf der Anwendungen wie z.B. das Recherchieren (Sichten, Auswählen, Grobschnitt) in Videomaterial laufen, das auf dem Videoserver 3A gespeichert ist. Das Schichtenmodell, das der erfindungsgemäßen Softwarearchitektur zugrundeliegt, und ein einfaches Blockschaltbild dieser Softwarearchitektur sind in dieser Figur erkennbar.

Horizontal untereinander (durch gestrichelte Linien getrennt) sind die drei Schichten Anwendungsschicht AL (application layer), Zwischenschicht ML (middleware layer) und Komponentenschicht CL (components layer) angeordnet.

Die Anwendungsschicht enthält die Anwendungsprogramme (inklusive einer graphischen Benutzeroberfläche) für verschiedene Anwendungen. Die Anwendungen nutzen Anwendungssteuerfunktionen 11 (ACF, application control function), die im allgemeinen eine Programmeinheiten sind. die ein Gerät, beispielsweise einen Computer oder irgendeine Komponente eines Computers, dazu veranlassen, eine spezielle Aufgabe auszuführen. Eine ACF könnte beispielsweise einen Computer dazu veranlassen, Datenmanagement- oder Textverarbeitungsfunktionen auszuführen. Eine ACF könnte auch dazu vorgesehen sein, die Einrichtung und Steuerung einer Multimedia-Kommunikationssitzung zwischen mehreren Benutzern zu veranlassen.

Die Komponentenschicht CL (components layer) beschreibt die physikalischen Komponenten (Entitäten) 6, 7, 8 der verschiedenen Netzelemente 2A, 3A wie beispielsweise Kodierer, Dekodierer, Videokarten, Netzwerkanschlußkarten und Speicherelemente, also alle physikalischen Elemente, die zur Realisierung der Anwendungen der Anwendungsschicht erforderlich sind.

Die Zwischenschicht ML (middleware layer) stellt das Bindeglied zwischen der Anwendungsschicht AL und der Komponentenschicht CL dar. Die Einführung einer separaten Zwischenschicht hat gegenüber der direkten Ansteuerung der Komponenten unmittelbar von den Anwendungen aus den Vorteil, daß sowohl einzelne Komponenten als auch einzelne Anwendungen ohne größeren Aufwand ausgetauscht, entfernt oder hinzugefügt werden können. Von den Anwendungen benötigte Funktionen werden im allgemeinen auch nicht durch einzelne Komponenten, sondern im Verbund mehrerer Komponenten erbracht. Diese Zusatzfunktionen werden typischerweise von mehreren Anwendungen genutzt und können deshalb in der Zwischenschicht allen Anwendungen angeboten werden. Außerdem werden in der Zwischenschicht alle zu realisierenden Funktionen quasi zusammengefaßt und die Gesamtkonsistenz des Systems sichergestellt.

Den Kern der Zwischenschicht bildet eine Verwaltungssoftware, das sogenannte Sitzungs-Verwaltungs- und Steuerungssystem SMC (session management and control system), das die Funktionalitäten zum Einrichten und Steuern von Multimedia-Kommunikationssitzungen zwischen mehreren Benutzern (an unterschiedlichen Netzelementen) zur Verfügung stellt. Im gezeigten Fall ist das SMC verteilt auf den beiden Netzelementen 2A, 3A angeordnet, d.h. auf jedem Netzelement 2A, 3A ist ein SMC-Objekt 9 bzw. 10 vorhanden. In diesen SMC-Objekten 9, 10 wird die Funktionalität des SMC realisiert durch entsprechende Dienst-Objekte (service objects) und Funktionsmodule (handlers), in die die SMC-Objekte 9, 10 unterteilt sind. Die SMC-Objekte 9, 10 erstellen und verwalten außerdem Abstraktionen von Entitäten der Komponentenschicht, die die physikalischen Elemente der Komponentenschicht in der Zwischenschicht einbetten. Solche Abstraktionen sind beispielsweise die Funktionsknoten (FN, functional nodes) 16, 20, die die Funktionalität zur Verarbeitung von Daten, zur Ausführung von verarbeitungsspezifischen Steueroperationen und die Datenstrukturen umfassen, die zur Speicherung von Zustandsinformationen erforderlich sind.

Die Funktionsknoten 16, 20 beinhalten auch Softwaretreiber für physikalische Elemente der Komponentenschicht und können auf jedem Netzelement 2A, 3A auch mehrfach instantiiert sein. Ein Funktionsknoten besteht aus zwei Teilen: dem Steuerungscode und dem Datenstromverarbeitungscode. Der Steuerungscode ist verantwortlich für die Initialisierung des Funktionsknoten (z.B. das Öffnen eines Gerätes und das Laden des Treibers für dieses Gerät) und für die Änderung von Parametern während der Ausführung einer Anwendung. Der Datenstromverarbeitungscode ist zuständig für die anwendungsabhängige Behandlung von Daten.

Das SMC-Objekt 9 bietet der Anwendungsschicht AL eine Schnittstelle an, die sogenannte Anwendungs-Programm-Schnittstelle API (application program interface), die als API-Objekt 12 im SMC-Objekt 9 instantiiert ist. Das API-Objekt 12 bietet einen Befehlssatz an, der von in der Anwendungsschicht laufenden Anwendungsprogrammen benutzt werden kann. Die Befehle werden von den in der Anwendungsschicht AL laufenden Anwendungssteuerfunktionen 11 aufgerufen.

Die SMC-Objekte 9, 10 umfassen weiterhin jeweils drei Funktionsmodule 13, 14, 15 bzw. 17, 18, 19, die sowohl miteinander als auch mit dem API-Objekt 12 und mit den Funktionsknoten 16, 20 kommunizieren und interagieren.

Die Profilmanagement-Funktionsmodule (PMH, profile management handler) 13, 17 sind für die Realisierung des Profilmanagements zuständig. Sie bearbeiten alle Aufträge von ACFs betreffend die Manipulation von Sitzungsprofilen und steuern die Einrichtung von Sitzungstopologien. Dazu kommuniziert es mit den zuständigen Objekten auf den betroffenen Netzelementen, um den Steuer- und Echtzeit-Verarbeitungscode der Funktionsknoten 16, 20 einzurichten.

Die Datenstrommanagement-Funktionsmodule (SBMH, stream and buffer management handler) 14, 18 sind für die Realisierung des Datenstrom- und Puffermanagements zuständig. Sie bearbeiten alle Aufträge von ACFs betreffend die Datenstromsteuerung, Datenstromsynchronisation und die Bearbeitung von Präsentationsbeschreibungen. Außerdem realisieren sie die Makro-Steuerung von Datenströmen, d.h., sie veranlassen Anfang und Ende einer Datenübertragung sowie Änderungen der Übertragungsgeschwindigkeit durch Kommunikation mit entsprechenden weiteren (hier nicht dargestellten) Objekten auf demselben oder auf anderen Netzelementen. Diese weiteren Objekte realisieren die Mikro-Steuerung von Datenströmen auf dem entsprechenden Netzelement durch Überwachung und/oder Zeitsteuerung der Aktivierung von Funktionsknoten (FN) und durch Verwaltung der Zwischenspeicherung von Daten zum interaktiven Zurückspielen gespeicherter Daten.

Die Ressourcenmanagement-Funktionsmodule (RMH, resource management handler) 15, 19 sind für die Realisierung des Ressourcenmanagements zuständig. Sie bearbeiten die Aushandlung von Dienstgüteanforderungen von ACFs bezüglich Kommunikationspfaden, die Reservierung von Ressourcen und generieren Meldungen für den Fall sinkender Dienstgüte. Dazu kooperieren die RMHs 15, 19 mit weiteren (nicht dargestellten) Objekten auf den Netzelementen, die in die Verarbeitung und die Übertragung von Daten entlang eines Datenpfades involviert sind. um die notwendige Kapazität (z.B. CPU-Rechenzeit, Festplatten-Ein-/Ausgabe-Bandbreite, Speicherplatz, Netzwerkbandbreite) zu reservieren und ggf. Zeitpläne aufzustellen (z.B. für die Aktivierung beteiligter Komponenten).

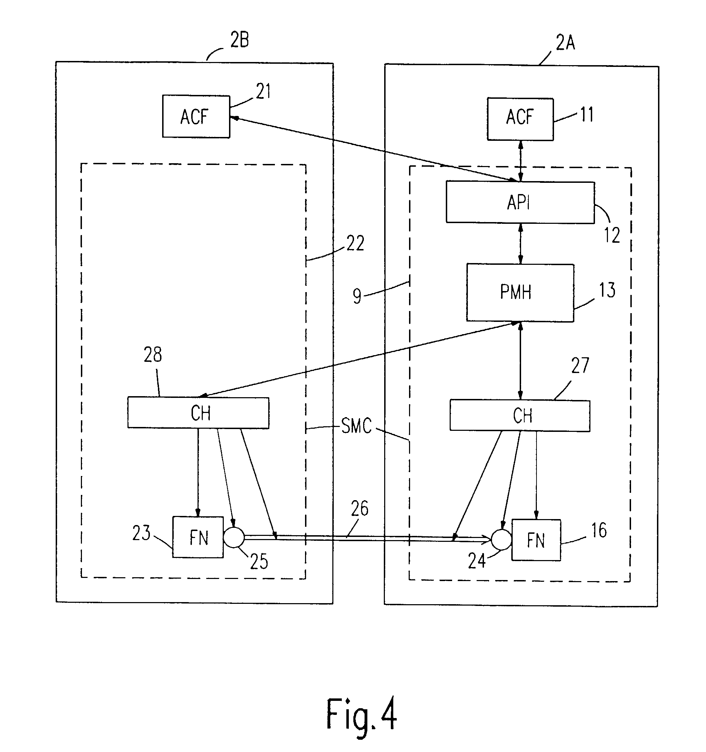

Die Funktion der Anwendungs-Programm-Schnittstelle API 12 soll anhand von Fig. 3 näher erläutert werden. In einem ersten Funktionsmodul 121 erfolgt eine Syntax- und Semantik-Prüfung der von einer ACF 11 aufgerufenen Befehle oder sonstigen Nachrichten. In einem zweiten Funktionsmodul 122, das mit dem ersten Funktionsmodul 121 kommuniziert, erfolgt eine Authentifizierungsprozedur, bei der überprüft wird, ob die aufrufende ACF 11 die notwendigen Berechtigungen besitzt, um die aufgerufene Funktion tatsächlich ausführen zu lassen. Dazu kann eine Kommunikation mit einem (nicht gezeigten) außerhalb des Netzelementes 2A befindlichen Authentifizierungsmodul stattfinden. In einem dritten Funktionsmodul 123 erfolgt eine Gültigkeitsprüfung, d.h. es wird in einem ersten Schritt überprüft, ob die gegebene Operation im aktuellen Zustand des Systems und mit den gegebenen Parametern tatsächlich aufgerufen werden darf, ohne daß es zu Inkonsistenzen oder unzulässigen Zuständen kommt.

Schließlich werden im Funktionsmodul 124 die Befehle und Nachrichten in Protokolle umgesetzt, die an die zuständigen Funktionsmodule 13, 14, 15 weitergereicht werden, die wechselseitig miteinander in Verbindung stehen. Einzelne Nachrichten und Befehle können dabei auch in Gruppen von Nachrichten oder Befehlen zusammengefaßt und umgesetzt werden, die an alle betroffenen Funktionsmodule 13, 14, 15 weitergereicht werden und die alle alle betroffenen Funktionsmodule 13, 14, 15 gleichermaßen instruieren. Diese Gruppen sind jeweils für ein bestimmte Art von Funktionen zuständig, nämlich für:
- Funktionen zur Verwaltung von Kommunikationssitzungen,
- Funktionen zur Bearbeitung von Sitzungstopologien,
- Funktionen zur Bearbeitung von Datenströmen,
- Funktionen zur Steuerung von Funktionsknoten und Diensten und
- Funktionen zur Unterstützung der Koordination von Anwendungssteuerfunktionen.

Die Funktionen zur Bearbeitung von Datenströmen werden dabei ausschließlich an das SBMH 14, die Funktionen zur Verwaltung von Kommunikationssitzungen und zur Bearbeitung von Sitzungstopologien ausschließlich an das PMH 13 weitergereicht, während die restlichen Funktionen an das PMH 13 und/oder das RMH weitergereicht werden.

Durch die beschriebene Ausgestaltung der Anwendungs-Programm-Schnittstelle API 12 wird die Entkopplung der Anwendungssteuerfunktionen von Programmierungsdetails, die sich beispielsweise aufgrund der unterschiedlichen Arten von verwendete Komponenten in der Komponentenschicht ergeben, erreicht. Die Anwendungs-Programm-Schnittstelle API 12 stellt Funktionen für alle derzeit vorhandenen Verarbeitungs- und Transportdienste bereit, ist aber auch auf einfache Weise erweiterbar um Funktionen für weitere Verarbeitungs- und Transportdienste.

Die funktionale Architektur des Profil-Managements, des Ressourcen-Managements und des Datenstrom-Managements im einzelnen wird nachfolgend anhand der Blockschaltbilder in den Figuren 4 bis 6 erläutert.

Die funktionale Architektur des Profil-Managements soll anhand des Blockschaltbildes in Fig. 4 verdeutlicht werden. Gezeigt sind zwei Netzelemente 2A, 2B, beispielsweise zwei Arbeitsstationen, mit symbolisch jeweils einer ACF 11, 21. Weiterhin ist ein SMC vorhanden, das als jeweils ein SMC-Objekt 9, 22 auf einem Netzelement 2A, 2B vorhanden ist und von dem in Fig. 4 nur die für das Profil-Management erforderlichen Funktionsmodule und Objekte, die zur ersten von drei Funktionsgruppen gehören. gezeigt sind.

Die ACFs der beiden Netzelemente 2A, 2B kommunizieren mit dem API-Objekt 12, das sich nur auf dem Netzelement 2A befindet. Das Profilmanangement-Funktionsmodul (PMH) 13 ist ein Objekt, das ebensooft instantiiert ist wie das API-Objekt 12 und das sich auf demselben Netzelement 2A wie das API-Objekt 12 befindet. Das PMH 13 implementiert die Datenbank, die die Beschreibung von Entitäten enthält, die von den ACFs 11, 21 eingerichtet wurden. In dieser Datenbank sind Einträge für die Funktionsknoten (FN) 16, 23, die Datenzugriffspunkte (DAP, data access points) 24, 25 und die Medien (media) 26 sowie deren wechselseitige Beziehungen und Gruppierung zu Topologien gespeichert.

Eine Topologie (topology) ist ein gerichteter Graph, der durch die gerichtete Verbindung von Datenzugriffspunkten 24, 25 mit geeigneten Medien 26 gegeben ist.

Ein Datenzugriffspunkt (DAP) 24, 25 ist ein Objekt, von dem ein Funktionsknoten 16, 23 Dateneinheiten liest bzw. an das ein Funktionsknoten Dateneinheiten aus seinem Datenstromverarbeitungscode schreibt. Lesen bzw. Schreiben bedeutet dabei das Einrichten eines Zeigers auf einen Speicherbereich, in dem die Dateneinheit gespeichert ist, d.h., nur Zeiger werden verschoben, es werden keine Dateneinheiten kopiert. Der Verarbeitungscode eines Funktionsknotens 16, 23 umfaßt nicht die Mittel, um Dateneinheiten von einem Funktionsknoten 16, 23 zu einem anderen zu verschieben. Ein DAP 24, 25 ist ein Objekt, das dynamisch von einem Funktionsknoten 16, 23 erstellt wird. Ein DAP kann entweder ein Eingabe-DAP (IDAP, input DAP) 24 oder ein Ausgabe-DAP (ODAP, output DAP) 25 sein. Ein IDAP 24 implementiert eine Warteschlange für Dateneinheiten bzw. Zeiger auf Dateneinheiten, den sogenannten Ausgabepuffer (play-out buffer). Ein ODAP 25 enthält Zeiger auf ein oder mehrere Medien 26, an die von einem Funktionsknoten 16, 23 gelieferte Dateneinheiten weitergereicht werden. An ein ODAP 25 gelieferte Daten können an verschiedene Medien 26 weitergereicht werden.

Ein Medium (medium) 26, ein Übertragungsmittel, beinhaltet die Datentransferfunktionalität. Medien implementieren verschiedene Transferfunktionen wie das Verschieben eines Zeigers auf eine Dateneinheit von einem DAP 24, 25 zu einem anderen DAP 24, 25 oder einen Netzwerktransportdienst, z.B. eine UDP/IP-Verbindung (UDP/IP: user datagram protocol/internet protocol) über Ethernet oder ATM. Die Abstraktionskomponente "Medium" ist die Kombination eines Sendemediumobjektes und eines Empfangsmediumobjektes, die beide vom SMC eingerichtet werden. Da es nicht erforderlich ist, daß die ACFs 11, 21 Zugriff haben auf die Medien, kann nur aus dem SMC selbst heraus auf die Medien zugriffen werden.

Das PMH 13 ist zuständig für semantische Überprüfungen von Funktionsaufrufen betreffend Topologien, z.B. den Funktionsaufruf, die zwei Funktionsknoten 16, 23 zu einer Topologie zu verbinden. Das PMH 13 weist den von ihm verwalteten Entitäten Identifizierer zu, welche an die ACFs 11, 21 für spätere Benutzung weitergegeben werden. Das PMH 13 reicht Funktionsaufrufe an Submodule, die Konfigurations-Module (CH, configuration handlers) 27, 28 auf demselben oder auf anderen Netzelementen 2A, 2B weiter, um Topologien einzurichten, zu verändern oder Teile von verteilten Echtzeit-Verarbeitungs-Topologien zu entfernen.

Ein Konfigurations-Modul (CH) 27, 28 ist zuständig für den Aufbau und das Entfernen von Teilen einer Topologie, welche auf demselben Netzelement 2A, 2B wie das CH 27, 28 selbst angeordnet sind. Ein CH 27, 28 erstellt und verbindet also die abstrahierten Objekte von Elementen der Komponentenschicht in der Zwischenschicht. Dies ist im unteren Teil von Fig. 4 gezeigt, wo zwei Funktionsknoten 16, 23 mit einem Ausgabe-DAP 25 bzw. einem Eingabe-DAP 24 durch ein Medium 26, z.B. eine Netzwerkleitung verbunden sind. Ein CH 27, 28 ist ein Objekt, das nur einmal pro Netzelement 2A, 2B eingerichtet ist. Ein CH 27. 28 enthält eine Datenbank, welche die von ihm eingerichteten als Objekte abstrahierten Komponenten der Komponentenschicht enthält. Diese Datenbank ermöglicht es, die Komponentenidentifizierer, welche am API-Objekt 4 sichtbar sind, den aktuell eingerichteten abstrahierten Komponenten zuzuordnen. Das CH 27, 28 implementiert außerdem die Algorithmen zur Einrichtung und zum Entfernen der Funktionsknoten 16, 23 und der Medien 26 und zum Verbinden derselben auf Anforderung des PMH 13.

Es kann auch vorgesehen sein, daß die ACFs direkt mit manchen als Objekte abstrahierten Komponenten, z.B. mit den Funktionsknoten 16, 23 kommunizieren können, wenn die Funktionsknoten 16, 23 den ACFs direkt Befehle anbieten. Ein Beispiel ist die Steuerung der Lautstärke einer Audio-Komponente oder die Änderung der Größe eines Ausgabefensters direkt von einer Anwendung aus. Dies führt zu einer Entlastung des SMC. Außerdem kann das SMC von den spezifischen Funktionen der Funktionsknoten 16, 23 sowie deren Steuerung unabhängig gehalten werden.

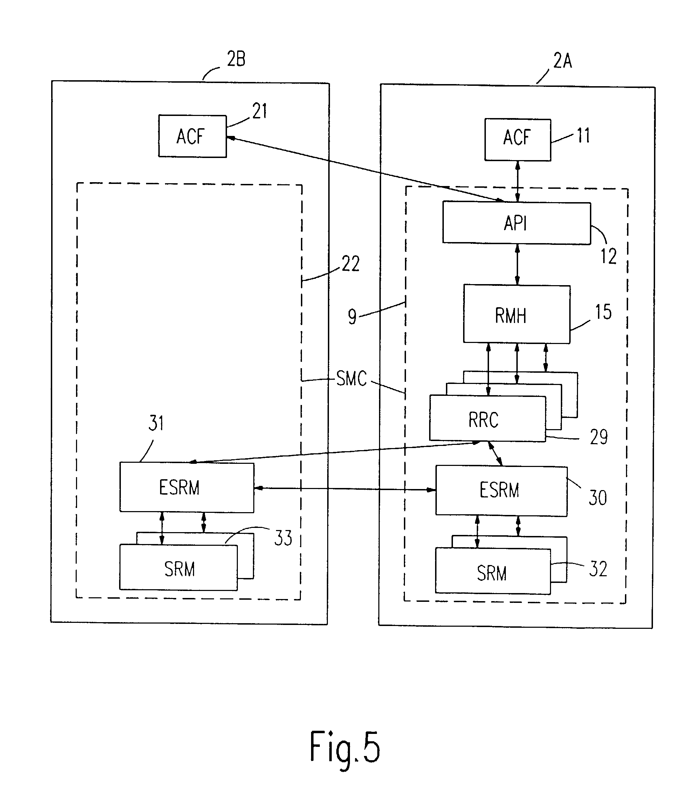

In Fig. 5 wird anhand eines Blockschaltbildes die funktionale Architektur des Ressourcen-Managements erläutert. Auf den beiden Netzelementen 2A, 2B ist jeweils wiederum ein SMC-Objekt 9, 22 vorhanden, wobei nur die für das Ressourcen-Management erforderlichen Objekte und Funktionsmodule, die zur zweiten der drei Funktionsgruppen gehören, gezeigt sind.

Das Ressourcen-Management-Funktionsmodul (RMH) 15 ist ein Objekt, das ebensooft instantiiert ist wie das API-Objekt 12 und das sich auf demselben Netzelement 2A wie das API-Objekt 12 befindet. Das RMH 15 implementiert die Datenbank, die die von den ACFs 11, 21 aufgestellten Erfordernisse bezüglich der Dienstgüte enthält. Das RMH 15 interagiert mit dem PMH (13 in Fig. 2), um Informationen darüber zu erhalten, wo und mit welcher Struktur Topologien eingerichtet sind. Es werden auch Anfragen des PMH (13) beantwortet betreffend das Vorhandensein und die Belegung von Ressourcen. Das RMH 15 interagiert auch mit dem SBMH (12 in Fig. 2), um zeitliche Parameter von Datenströmen zu erhalten, die relevant sind für die Bestimmung der zu reservierenden Ressourcen.

Der Ablauf der Ressourcen-Reservierung wird von einem Ressourcen-Reservierungsprotokoll gesteuert. Das SMC 9, 22 implementiert mehrere nicht interagierende Ressourcen-Reservierungsprotokolle. Ein solches Ressourcen-Reservierungsprotokoll wird von verschiedenen Submodulen, dem Ressourcen-Reservierungs-Modul (RRC, resource reservation coordinater) 29 und mehreren Endsystem-Ressourcenmanagement-Modulen (ESRM, end-system resource managers) 30, 31 implementiert. Das Kommunikationsschema zwischen den RRCs 29 und den ESRMs 30, 31 sowie unter den ESRMs 30, 31 selbst wird von dem Ressourcen-Reservierungsprotokoll definiert.

Ein RRC 29 ist ein Objekt, das dauerhaft existiert und auf demselben Netzelement 2A wie das RMH 15 angeordnet ist. Das RRC 29, das in mehreren nebeneinander existierenden Instanzen (jeweils eine Instanz pro Ressourcen-Reservierungsprotokoll) auf einem Netzelement 2A vorhanden sein kann, ist zuständig für die Koordinierung der Zuweisung und Freigabe von Ressourcen. Es gibt Anforderungen an ein ESRM 30, 31 auf demselben oder auf anderen Netzelementen 2A, 2B weiter bezüglich der Zuweisung von Dienstgüteparametern und bezüglich der Reservierung von Ressourcen auf spezifischen Netzelementen 2A, 2B. Das RRC 29 bearbeitet die globale Koordinierung des Ressourcen-Reservierungsprozesses. Ein Protokoll und damit auch das zugeordnete RRC 29 werden von einem eindeutigen Protokollidentifizierer gekennzeichnet.

Die RRCs 29 interagieren mit ESRMs 30, 31, die zuständig sind für das Aushandeln der individuellen Ressourcen für die Teile eines Datenstroms, die auf einem spezifischen Netzelement 2A, 2B instantiiert sind. Die ESRMs 30, 31 können außerdem die aktuelle Dienstgüte überwachen. um entsprechende Meldungen auszugeben oder Nachverhandlungen einzuleiten. Ein ESRM 30, 31 ist ein Objekt, das auf Anforderung eines RRC 29 erstellt wird. Die ESRMs 30, 31 können auch über eine direkte Verbindung miteinander kommunizieren, was die Implementierung verteilt ablaufender Protokolle erlaubt.

Eine reservierbare Ressource (z.B. eine Komponente der Komponentenschicht) ist verknüpft mit einem weiteren Submodul, dem Spezial-Ressourcenmanagement-Modul (SRM, special resource manager) 32, 33 auf jedem Netzelement 2A, 2B. Ein SRM 32, 33 ist ein Objekt, das eingerichtet wird, sobald die von ihr gesteuerte Ressource verfügbar ist. Die Einrichtung von SRMs 32, 33 wird vom SMC durchgeführt. Ein ESRM 30, 31 kann ein SRM 32, 33 für eine Ressource durch einen Vermittlungsdienst finden. Ein SRM 32, 33 implementiert die Schnittstelle und Datenstrukturen für die Buchhaltung von Reservierungsanforderungen und soweit anwendbar den Planungsalgorithmus für die Benutzung von Ressourcen (z.B. im Falle von CPUs).

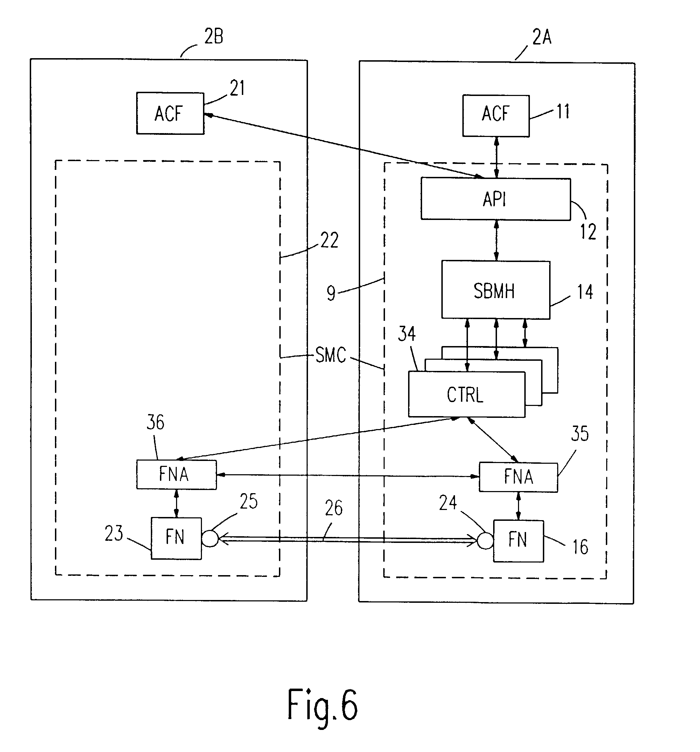

In Fig. 6 wird anhand eines Blockschaltbilds die funktionale Architektur des Datenstrom-Managements erläutert. Von den auf den beiden Netzelementen 2A, 2B vorhandenen SMC-Objekten 9, 22 sind hier nur die für das Datenstrom-Management erforderlichen Objekte und Funktionsmodule, die zur dritten Funktionsgruppe gehören, gezeigt.

Das Datenstrom-Management-Funktionsmodul (SBMH) 14 ist ein Objekt, das ebensooft instantiiert ist wie das API-Objekt 12 und das sich auf demselben Netzelement 2A wie das API-Objekt 12 befindet. Das SBMH 14 implementiert die Datenbank, die die Beschreibung der von den ACFs 11, 21 für die Datenstromsteuerung benötigten Entitäten und der von den ACFs 11, 21 gesetzten zeitlichen Parameter von Datenströmen enthält. In der Datenbank sind Einträge für einzelne Datenströme oder Gruppen von Datenströmen und deren zeitliche Parameter enthalten. Das SBMH 14 ist zuständig für semantische Überprüfungen betreffend die Korrektheit von Funktionsaufrufen zur Datenstromsteuerung, z.B. beim Starten oder Stoppen von Datenflüssen oder bei der Veränderung der Datenflußgeschwindigkeit. Das SBMH 14 interagiert mit dem PMH (13 in Fig. 2), um Ortsinformationen, Referenzen auf Funktionsknoten und Kenntnisse über die Struktur von Teilen von Topologien zu erhalten, die von Datenströmen benutzt werden.

Ein Datenstrom wird von einem einzigen Datenstromsteuerungsprotokoll gesteuert. Das SMC stellt mehrere verschiedene Datenstromsteuerungsprotokolle zur Verfügung. Ein Datenstromsteuerungsprotokoll wird von weiteren Submodulen, einem Steuerungs-Modul (CTRL, controller) 34 und Funktionsknoten-Modulen (FNA, functional node agent) 35, 36 implementiert. Die auszutauschenden Nachrichten und deren Abfolge zwischen den Steuerungs-Modulen 34 und den Funktionsknoten-Modulen 35, 36 sowie zwischen den Funktionsknoten-Modulen 35, 36 selbst wird durch das Datenstromsteuerungsprotokoll definiert.

Ein Steuerungs-Modul 34 ist ein Objekt, das auf demselben Netzelement 2A angeordnet ist wie das SBMH 14, welches es erstellt hat. Ein Steuerungs-Modul 34 bietet Operationen für die Makro-Steuerung einzelner Datenströme und Datenstromgruppen an. Datenstromgruppen können erstellt und gelöscht werden. Datenströme können zu Datenstromgruppen hinzugefügt oder von Datenstromgruppen entfernt werden. Einzelne Datenströme und Datenstromgruppen können geladen, gestartet und gestoppt sowie deren Geschwindigkeit und Wiedergaberichtung geändert werden. Es existiert ein Steuerungs-Modul 34 für jedes Datenstromsteuerungsprotokoll, wobei mehrere Steuerungs-Module 34 für unterschiedliche Datenstromsteuerungsprotokolle nebeneinander existieren ohne zu interagieren. Das Datenstromsteuerungsprotokoll und das zugeordnete Steuerungs-Modul 34 werden durch einen eindeutigen Protokollidentifizierer gekennzeichnet.

Ein Funktionsknoten-Modul 35, 36 ist ein Objekt, das auf Anforderung von einem Steuerungs-Modul 34 eingerichtet wird, das mit den Funktionsknoten-Modulen 35, 36 interagiert. Die Funktionsknoten-Module 35, 36 übernehmen die zeitliche Feinsteuerung der zugeordneten Funktionsknoten 16, 23 entsprechend eines spezifischen Datenstromsteuerungsprotokolls. Funktionsknoten-Module 35, 36 überwachen und steuern im allgemeinen das zeitliche Verhalten des Datentransfers und der Datenverarbeitung von Funktionsknoten 16, 23. Ein Funktionsknoten-Modul 35, 36 ist nur dem von ihm gesteuerten Funktionsknoten 16, 23 zugeordnet. Deshalb sind die Funktionsknoten-Module 35, 36 auf demselben Netzelement 2A, 2B angeordnet wie der zugehörige Funktionsknoten 16, 23. Zur Abstimmung der Datenstromsteuerung können auf unterschiedlichen Netzelementen 2A, 2B eingerichtete Funktionsknoten-Module 35, 36 auch miteinander kommunizieren.

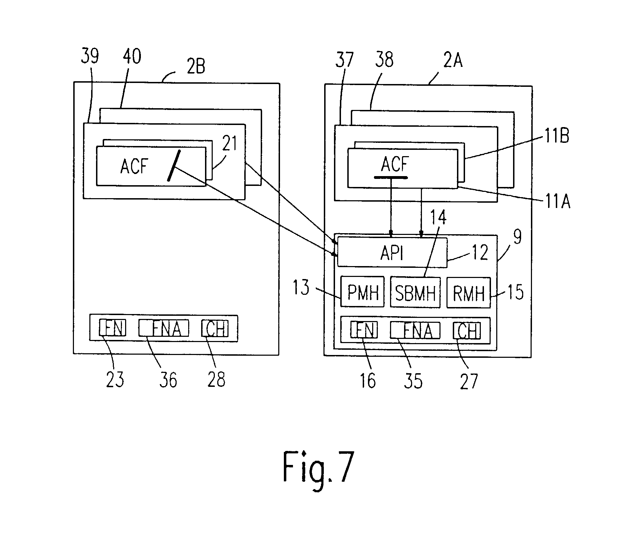

In Fig. 7 sind zwei Netzelemente 2A, 2B gezeigt, bei denen die Verwaltungssoftware nicht wie bei den in Fig. 2 gezeigten Netzelementen 2A, 3A verteilt, sondern zentral auf dem Netzelement 2A angeordnet ist. Das bedeutet, daß nur auf dem Netzelement 2A ein SMC-Objekt 9 mit allen erforderlichen Funktionsmodulen und Objekten (API 12, PMH 13, SBMH 14, RMH 15, FN 16, FNA 35, CH 27), während auf dem Netzelement 2B nur die Objekte FN 23, FNA 36 und CH 28 vorhanden sind, die auf jedem Netzelement eines Netzwerkes mit der beschriebenen Verwaltungssoftware mindestens vorhanden sein müssen. Außerdem ist in Fig. 7 zu erkennen, daß auf einem Netzelement 2A, 2B auch mehrere Anwendungen 37, 38 bzw. 39, 40 laufen können, wobei aus einer Anwendung 37 heraus auch mehrere ACFs 11A, 11B gleichzeitig auf das API-Objekt 12 zugreifen können.

Zur Verwaltung von Objekten und zur Gewährleistung der Ortstransparenz von Objekten in einem in Fig. 1 gezeigten Netzwerk wird eine Objektverwaltungssoftware (ORB, objekt request broker) eingesetzt. Dazu können bekannte Betriebssysteme wie z.B. Microsoft DCOM (distributed common object model) oder CORBA (common object request broker architecture), die diese Funktionalität bereitstellen, oder auch eine eigens dafür erstellte Infrastruktur eingesetzt werden.

## Patentansprüche

1. Übertragungssystem mit Mitteln zur Steuerung der Datenübertragung zwischen mehreren Netzelementen (2, 3, 4),
dadurch gekennzeichnet, daß die Mittel eine Verwaltungssoftware (SMC) zur Verwaltung und Steuerung von Kommunikationssitzungen aufweisen, daß die Verwaltungssoftware (SMC) eine in mehrere Funktionsgruppen aufgeteilte Architektur aufweist und daß eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind.

2. Übertragungssystem nach Anspruch 1,
dadurch gekennzeichnet, daß die Funktionsgruppen jeweils mindestens ein Funktionsmodul (PMH, RMH, SBMH) aufweisen und daß den Funktionsmodulen (PMH, RMH, SBMH) weitere Submodule (CH, RRC, ESRM, SRM, CTRL, FNA) zugeordnet sind.

3. Übertragungssystem nach Anspruch 2,
dadurch gekennzeichnet, daß die Funktionsmodule (PMH, RMH, SBMH) jeweils einmal und zentral auf einem einzigen Netzelement (2A) oder jeweils mehrfach und verteilt auf verschiedenen Netzelementen (2A, 3A) angeordnet sind.

4. Übertragungssystem nach Anspruch 1,
dadurch gekennzeichnet, daß die Verwaltungssoftware (SMC) in einer Zwischenschicht (ML) zwischen einer Anwendungsschicht (AL) und einer Komponentenschicht (CL) angeordnet ist.

5. Übertragungssystem nach Anspruch 4,
dadurch gekennzeichnet, daß in der Zwischenschicht (ML) Komponenten (6, 7, 8) der Komponentenschicht (CL) als Objekte abstrahiert angeordnet sind.

6. Übertragungssystem nach Anspruch 4,
dadurch gekennzeichnet, daß die Zwischenschicht (ML) eine auf mindestens einem Netzelement (2A) angeordnete Schnittstelle (API) zur Anwendungsschicht aufweist zur Bereitstellung von Befehlen der Verwaltungssoftware (SMC) und zur Verteilung aufgerufener Befehle an die Funktionsgruppen.

7. Verwaltungssoftware zur Verwaltung und Steuerung der Datenübertragung zwischen mehreren Netzelementen (2, 3, 4),
dadurch gekennzeichnet, daß die Verwaltungssoftware (SMC) eine in mehrere Funktionsgruppen aufgeteilte Architektur aufweist, daß eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind.

8. Verwendung der Verwaltungssoftware nach Anspruch 7 in einem
Datenübertragungssystem zur Übertragung von Multimediadaten, in einem Nachrichteninformationssystem zum Recherchieren in Nachrichtenmaterial und zum Erstellen von Nachrichtenbeiträgen, in einem Ärzteverbundnetzwerk zur Übertragung von medizinischen Bilddaten oder in einem Kommunikationssystem.

9. Medium mit einer Verwaltungssoftware zur Verwaltung und Steuerung der Datenübertragung zwischen mehreren Netzelementen (2, 3, 4),
dadurch gekennzeichnet, daß die Verwaltungssoftware (SMC) eine in mehrere Funktionsgruppen aufgeteilte Architektur aufweist, daß eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind.

10. Netzelement mit einer Verwaltungssoftware zur Verwaltung und Steuerung der Datenübertragung zwischen mehreren Netzelementen (2, 3, 4),
dadurch gekennzeichnet, daß die Verwaltungssoftware (SMC) eine in mehrere Funktionsgruppen aufgeteilte Architektur aufweist, daß eine erste Funktionsgruppe zur Konfigurierung von Kommunikationssitzungen, eine zweite Funktionsgruppe zur Verwaltung von Ressourcen und eine dritte Funktionsgruppe zur Steuerung von Datenströmen vorgesehen sind.
